# EUROPÄISCHE PATENTANMELDUNG

(11) **EP 3 354 606 A1**
(43) Veröffentlichungstag der Anmeldung: **01.08.2018**
(21) Anmeldenummer: 18151978.6
(22) Anmeldetag: 16.01.2018
(51) Int. Cl.: B65G 49/04

(54) **TAUCHBEHANDLUNGSANLAGE**

(30) Priorität: 25.01.2017 DE 102017000639
(71) Anmelder: AUDI AG, 85045 Ingolstadt (DE)
(72) Erfinder: Dietrich, Horst, 71543 Wüstenrot (DE); Schmitt, Aurel, 74172 Neckarsulm (DE); Eschenauer, Torsten, 74867 Neunkirchen (DE); Bortot, Dino, 85049 Ingolstadt (DE); Holzapfel, Julia, 94161 Ruderting (DE)

(57) **Zusammenfassung**

Die Erfindung betrifft eine Tauchbehandlungsanlage (10, 40, 70, 90, 100) für Fahrzeugkarosserien (28, 30, 32, 62, 78, 80, 92, 94), umfassend wenigstens drei Tauchbecken (12, 14, 16, 42, 44, 72) und ein Transportsystem, mittels welchem zu behandelnde Fahrzeugkarosserien (28, 30, 32, 62, 78, 80, 92, 94) individuell und unabhängig voneinander in ein jeweiliges Tauchbecken (12, 14, 16, 42, 44, 72) ein- beziehungsweise aus diesem ausgeführt werden können. Die Tauchbecken (12, 14, 16, 42, 44, 72) sind sternähnlich um eine Mittelachse (18, 46, 104) angeordnet und die Ein- beziehungsweise Ausführbewegung der Fahrzeugkarosserien (28, 30, 32, 62, 78, 80, 92, 94) durch das Transportsystem umfasst eine Schwenkbewegung um die Mittelachse (18, 46, 104).

## Beschreibung

Die Erfindung betrifft eine Tauchbehandlungsanlage für Fahrzeugkarosserien, umfassend wenigstens drei Tauchbecken und ein Transportsystem, mittels welchem zu behandelnde Fahrzeugkarosserien individuell und unabhängig voneinander in ein jeweiliges Tauchbecken ein- beziehungsweise aus diesem ausgeführt werden können,

Es ist bekannt, dass die industrielle Beschichtung von Werkstücken, insbesondere von Fahrzeugkarosserien, eine Vielzahl von Beschichtungsprozessen erfordert, wie beispielsweise eine Vorbehandlung, eine Vorbeschichtung mittels kathodischer Tauchlackierung in einer Tauchbehandlungsanlage, ein Nahtabdichten mittels PVC oder ein Lackieren der Fahrzeugkarosserie. Jeder dieser Beschichtungsprozesse ist seinerseits wieder in verschiedene Beschichtungsprozessschritte untergliedert.

Bei einer Beschichtung mittels einer Tauchbehandlungsanlage beispielsweise wird eine Fahrzeugkarosserie mittels geeigneter Transportvorrichtungen zumeist komplett in ein mit einer Vorbehandlungsflüssigkeit gefülltes oder mit Spritzringen bestücktes Becken getaucht beziehungsweise eingeführt und zur Erzielung eines verbesserten Beschichtungsergebnisses dabei gegebenenfalls auch geschwenkt, gedreht oder auf andere Weise bewegt. Je nach gewünschtem Beschichtungsprozess ist eine Fahrzeugkarosserie typischerweise sequentiell in eine Mehrzahl von mit verschiedenen Vorbehandlungsflüssigkeiten gefüllte oder mit Spritzringen bestückte Becken zu verbringen. Hierbei ist üblicherweise jedoch nicht für alle zu beschichtenden Werkstücke ein- und dieselbe Beschichtungssequenz vorgegeben, vielmehr sind je nach Beschichtungsprozess gegebenenfalls jeweilige Beschichtungsprozessschritte zu überspringen oder alternative Varianten zu wählen.

Gemäß dem Stand der Technik erfolgt ein Transport von Fahrzeugkarosserien zu den jeweiligen Tauchbecken mittels einer spurgebundenen Transportanlage, wobei die Fahrzeugkarosserien beispielsweise auf sogenannten Shuttlewägen angeordnet sind, welche auf einem längs der Tauchbecken verlaufenden Schienenstrang beziehungsweise Verfahrweges bewegbar sind und mittels derer sie dann bedarfsweise in ein jeweiliges Tauchbecken zur Vorbehandlung eingetaucht werden können. Für den Fall, dass ein jeweiliger Beschichtungsprozessschritt beziehungsweise ein Eintauchen in ein jeweiliges Tauchbecken individuell nicht erforderlich ist, wird die zu beschichtende Fahrzeugkarosserie ohne einzutauschen an dem Tauchbecken vorbeibewegt.

Es sind sowohl Transportvarianten bekannt, gemäß derer die auf dem Verfahrweg befindlichen Fahrzeugkarosserien synchron mit derselben Geschwindigkeit bewegt werden als auch Transportvarianten, gemäß derer die auf dem Verfahrweg befindlichen Fahrzeugkarosserien mit verschiedenen Geschwindigkeiten aber unter Beibehaltung ihrer individuellen Reihenfolge bewegbar sind.

Das Patentdokument DE10 2011 013415 A1 offenbart eine Tauchbehandlungsanlage für Fahrzeugkarosserien mit mindestens einem Tauchbecken, welches mit einer Behandlungsflüssigkeit füllbar ist, in welche die zu behandelnden Fahrzeugkarosserien eingetaucht werden können. Ein Fördersystem bewegt die zu behandelnden Fahrzeugkarosserien an das Tauchbecken heran, in den Innenraum des Tauchbeckens hinein, aus dem Tauchbecken heraus und von diesem weg. Es umfasst wenigstens eine Transporteinheit, die eine Befestigungseinrichtung mit sich führt, über welche die Fahrzeugkarosserie mit der Transporteinheit koppelbar ist. Die wenigstens eine Transporteinheit ist ein mehrachsiger Förderroboter, welcher entlang einer Verfahrachse verfahrbar ist und einen Roboterarm umfasst, der die Befestigungseinrichtung trägt.

Nachteilig an dem genannten Stand der Technik ist, dass auch für den Fall des Überspringens eines oder mehrerer Tauchbecken ein Transport der Fahrzeugkarosserie an der gesamten Länge der zu überspringenden Tauchbecken vorbei erfolgen muss. Auch ist die Grundsequenz der Beschichtungsprozessschritte beziehungsweise der zugehörigen Tauchbecken durch deren Anordnung vorgegeben und nicht veränderlich.

Ausgehend von diesem Stand der Technik ist es Aufgabe der Erfindung, eine Tauchbehandlungsanlage mit einem verbesserten Transportsystem anzugeben, durch welches ein vereinfachtes Überspringen eines Tauchbeckens und eine höhere Flexibilität ermöglicht ist.

Diese Aufgabe wird gelöst durch eine Tauchbehandlungsanlage der eingangs genannten Art. Diese ist dadurch gekennzeichnet, dass die Tauchbecken sternähnlich um eine Mittelachse angeordnet sind und dass die Ein- beziehungsweise Ausführbewegung der Fahrzeugkarosserien durch das Transportsystem eine Schwenkbewegung um die Mittelachse umfasst.

Die Grundidee der Erfindung besteht darin, die eigentliche Transportbewegung einer Fahrzeugkarosserie von einem Tauchbecken in ein nächstes Tauchbecken nicht als Linearbewegung längs eines geraden Transportweges sondern als Teil einer Dreh- bewegung um die Mittelachse auszugestalten. Dies ist durch die erfindungsgemäße sternähnliche Anordnung der Tauchbecken um die Mittelachse ermöglicht.

Hierdurch erschließen sich wesentliche Vorteile. Einerseits ist durch eine derartige Drehbewegung ein beschleunigter Transport einer Fahrzeugkarosserie bei gleichzeitig vereinfachtem Transportsystem ermöglicht, wobei individuell nicht erforderliche Tauchbecken in besonders einfacher Weise mit wenig Zeitaufwand übersprungen werden können. Zudem wird durch eine kreisrunde Anordnung und das damit vereinfacht ausführbare Transportsystem eine erhebliche Platzersparnis erreicht.

Andererseits ist hierdurch auch ein Auflösen der durch die Reihenfolge der Tauchbecken vorgegebenen Grundsequenz der Bearbeitungsprozessschritte ermöglicht. So ist beispielsweise bei einem wiederholt für ein und dieselbe Fahrzeugkarosserie benötigten Beschichtungsprozessschritt nicht zwangsläufig ein zweites mit einer identischen Vorbehandlungsflüssigkeit gefülltes Tauchbecken notwendig, vielmehr kann in einem Beschichtungsprozess mittels Dreh- beziehungsweise Schwenkbewegungen um die Mittelachse mit einem summarischen Dreh- beziehungsweise Schwenkwinkel von größer 360° dasselbe Tauchbecken von einer Fahrzeugkarosserie problemlos erneut angefahren werden. Dies lässt sich prinzipiell auch durch eine Rückwärtsbewegung längs des Verfahrweges erreichen.

Ein individueller und unabhängig voneinander erfolgender Transport von Fahrzeugkarosserien bedeutet, dass mehrere sich gleichzeitig in einer Tauchbehandlungsanlage befindliche Fahrzeugkarosserien nicht in synchroner Weise von Tauchbecken zu Tauchbecken transportiert werden, sondern vielmehr dass eine Fahrzeugkarosserie unabhängig von anderen Fahrzeugkarosserien transportierbar ist und Tauch- bzw. Spritzzeiten individuell je Fahrzeugkarosserie eingestellt bzw. Tauchbecken individuell übersprungen werden können.

Neben einer Schwenkbewegung um die Mittelachse ist das erfindungsgemäße Transportsystem auch dafür vorgesehen, eine über einem Tauchbecken positionierte Fahrzeugkarosserie im Rahmen der Ein- beziehungsweise Ausführbewegung in dieses abzusenken und aus diesem anzuheben. Summarisch umfasst das Transportsystem einer erfindungsgemäßen Tauchbehandlungsanlage somit wenigstens zwei Bewegungsfreiheitsgrade, nämlich einen für eine Dreh-/ Schwenkbewegung um die Mittelachse und den anderen zum Absenken-/Anheben einer Fahrzeugkarosserie. Um jedoch eine erhöhte Flexibilität auch in Hinsicht auf unterschiedliche Geometrien einzutauchender Fahrzeugkarosserien vorzuhalten, kann wenigstens ein weiterer Bewegungsfreiheitsgrad, beispielsweise in radialer Richtung, vorteilhaft sein.

Bei typischen Grundflächen von Fahrzeugkarosserien von 2m x 5m kann eine geeignete Grundfläche eines Tauchbeckens beispielsweise 2,8m x 7m betragen. Ein typischer Winkel zwischen zwei benachbarten Tauchbecken beträgt beispielsweise 60° bei maximal sechs im Stern angeordneten Becken und 45° bei maximal acht im Stern angeordneten Becken. Nicht jede Position einer solchen sternähnlichen Anordnung muss hierbei notwendigerweise mit einem Tauchbecken besetzt sein. Der Innendurchmesser der sich im Inneren einer solchen Anordnung ergebenden Fläche kann beispielsweise 6m bis 8m betragen. Das Transportsystem ist hierbei als um die Mittelachse dreh-/ schwenkbar auszugestalten.

Gemäß einer bevorzugten Ausgestaltungsvariante der erfindungsgemäßen Tauch- behandlungsanlage weist das Transportsystem einen Arbeitsbereich auf, welcher sich rotationssymmetrisch um die Mittelachse erstreckt. Dies ergibt sich letztendlich aus der Dreh- / Schwenkbarkeit des Transportsystems beziehungsweise Teilen davon um die Mittelachse. Der Arbeitsbereich des Transportsystems muss zumindest einen derartigen Radius aufweisen, dass eine Fahrzeugkarosserie über einem jeweiligen Tauchbecken positioniert werden kann und in dieses abgesenkt beziehungsweise aus diesem angehoben werden kann.

Typischerweise werden Fahrzeugkarosserien für einen Transport nicht direkt vorne an das Transportsystem angekoppelt, vielmehr sind die Fahrzeugkarosserien zumeist in einer rahmenähnlichen Adaptervorrichtung angeordnet, welche definierte Kopplungsstellen zum Verbinden mit entsprechenden Vorrichtungen des Transportsystems aufweist. Der Arbeitsbereich des Transportsystems ist in diesem Fall entsprechend den für einen Transport von Fahrzeugkarosserien erforderlichen benötigten Positionen der Kopplungsstellen auszugestalten. Im Falle von mehreren zu transportierenden Typen von Fahrzeugkarosserien mit gegebenenfalls unterschiedlichen benötigten Positionen der Kopplungsstellen ist dies entsprechend zu berücksichtigen.

Entsprechend einer weiteren Variante der erfindungsgemäßen Tauchbehandlungsanlage weist diese wenigstens eine Übergabestation für Fahrzeugkarosserien auf, welche zusammen mit den Tauchbecken sternförmig um die Mittelachse angeordnet ist. Eine Position in einer derartigen sternförmigen Anordnung kann somit von einem Tauchbecken oder einer Übergabestation eingenommen werden oder aber auch frei bleiben. Eine Übergabestation ist dafür vorgesehen, Fahrzeugkarosserien an die Tauchbehandlungsanlage zu übergeben oder von dieser zu übernehmen. Selbstverständlich sind auch andere Ausführungsvarianten einer Übergabestation denkbar, beispielsweise eine vorgelagerte Übergabestation mit einer bereits vor Anfahren der Tauchbehandlungsanlage erfolgenden Umsetzung der Fahrzeugkarosserien auf einen jeweiligen Skidträger beziehungsweise eine rahmenförmigen Adaptervorrichtung.

Gemäß einer weiteren Erfindungsvariante ist das Transportsystem dafür vorgesehen, Fahrzeugkarosserien aus der Übergabestation zu entnehmen beziehungsweise dorthin zu übergeben. Dies kann beispielsweise dadurch erfolgen, dass eine in einer Aufnahmevorrichtung befindliche und in der Übergabestation abgestellte Fahrzeugkarosserie mittels einer Kopplungsvorrichtung mit dem Transportsystem verbunden wird und nachfolgend den gewünschten Tauchbecken zugeführt wird. Anschließend wird die Fahrzeugkarosserie wieder in dieser oder auch einer weiteren Übergabestation abgestellt und vom Transportsystem abgekoppelt. Das Vorhandensein von mehr als einer Übergabestation erhöht hierbei die Flexibilität des Transportsystems einerseits, wobei andererseits entsprechend weniger Platz für Tauchbecken zur Verfügung steht.

Entsprechend einer weiteren Variante der erfindungsgemäßen Tauchbehandlungsanlage ist ein übergeordnetes Transportsystem vorhanden, welches dafür vorgesehen ist, Fahrzeugkarosserien aus der Übergabestation zu entnehmen beziehungsweise dorthin zu übergeben. Somit erfolgt durch das übergeordnete Transportsystem beispielsweise eine Zuführung von Fahrzeugkarosserien aus dem Rohbau in die Tauchbehandlungsanlage und ein Weitertransport der tauchbehandelten Fahrzeugkarosserien beispielsweise zu einer PVC Applikation. Ein übergeordnetes Transportsystem kann beispielsweise ein Fahrerloses Transportsystem (FTS) mit Flurfahrzeugen umfassen, welche direkt in die Übergabestation einfahren.

Gemäß einer weiteren Ausgestaltungsform der Tauchbehandlungsanlage umfasst das Transportsystem wenigstens einen Roboter mit einer Roboterbasis und einem Roboterarm, wobei die Roboterbasis längs eines sich ringähnlich um die Mittelachse erstreckenden Verfahrweges bewegbar und damit letztendlich auch indirekt um diese dreh- beziehungsweise schwenkbar ist. Je nach gewünschter Position kann der Roboter in eine vorzugsweise mittige Position vor einem der Tauchbecken beziehungsweise auch in eine vorzugsweise mittige Position vor einer Übergabestation verfahren werden. Der Roboterarm ist dafür vorgesehen, eine angekoppelte Fahrzeugkarosserie über einem Tauchbecken zu positionieren und darin abzusenken, beziehungsweise daraus anzuheben. Hierbei ist der Roboter in seiner Tragkraft an das Gewicht der zu transportierenden Fahrzeugkarosserien anzupassen, welches durchaus auch 500kg überschreiten kann.

Gemäß einer weiteren Ausführungsvariante der erfindungsgemäßen Tauchbehandlungsanlage weist der Roboterarm des Roboters wenigstens drei Bewegungsfreiheitsgrade auf. Ein Roboterarm umfasst üblicherweise eine kinematische Kette von mehreren Roboterarmgliedern, welche an ihren jeweiligen Verbindungsstellen eine bewegliche Verbindung aufweisen, beispielsweise ein jeweiliges Gelenk, wobei dies einem jeweiligen Bewegungsfreiheitsgrad entspricht. Für jeden Bewegungsfreiheitsgrad ist typischerweise ein eigener Antrieb erforderlich, wobei alle Antriebe eines Roboters beziehungsweise Roboterarms üblicherweise von einem gemeinsamen Robotercontroller gesteuert werden, so dass sich am distalen Ende des Roboterarms eine koordinierte Bewegung entsprechend der Programmierung des Roboters ergibt. Bewegungen längs eventueller Verfahrachsen, welche ebenfalls einem Bewegungsfreiheitsgrad entsprechen, sind in einer derartigen Steuerung zumeist ebenfalls integriert.

Bei einem Roboterarm aus zwei mit Drehgelenken verketteten Roboterarmgliedern kann mittels entsprechender Drehbewegungen eine beliebige Positionierung des distalen Endes des Roboterarms in einer von der Mittelachse abgehenden Ebene erreicht werden, sofern sich dieses innerhalb des Arbeitsbereiches befindet. Bei Vorhandensein eines dritten Gelenkes am distalen Ende des Roboterarms ist zudem eine Ausrichtung einer dort befindlichen Kopplungsstelle ermöglicht. Somit lässt sich beispielsweise eine Fahrzeugkarosserie bei konstant waagerechter Ausrichtung über den Rand eines Tauchbeckens heben. Es ist aber auch möglich, mit einem derartigen Roboterarm eine Schwenkbewegung einer bereits in ein Tauchbecken eingetauchten Fahrzeugkarosserie durchzuführen und somit ein gegebenenfalls verbessertes Beschichtungsergebnis zu erzielen.

Selbstverständlich ist es auch möglich, mehrere unabhängig voneinander bewegbare Roboter auf ein und demselben Verfahrweg beziehungsweise ein und derselben Verfahrschiene zu platzieren, und so einen parallelen Transport von Fahrzeugkarosserien zu ermöglichen. So kann die Anzahl der Roboter auf einem Verfahrweg beispielsweise auch der Anzahl der Tauchbecken beziehungsweise der Anzahl der Positionen in der sternförmigen Anordnung entsprechen. Hervorzuheben ist hierbei, dass die Roboter idealerweise in beide Richtungen längs des sich ringähnlich erstreckenden Verfahrweges bewegbar sind und auch in der Anzahl der Umdrehungen um die Mittelachse nicht limitiert sind.

Darüber hinaus ist es sowohl möglich, eine Fahrzeugkarosserie für einen kompletten Tauchbehandlungszyklus ein und demselben Roboter des Transportsystems zuzuordnen, oder aber auch, eine Fahrzeugkarosserie nach deren Eintauchen in ein Tauchbecken für die Dauer der Tauchbehandlung dort abzustellen und von demselben oder einem anderen Roboter wieder aus dem jeweiligen Tauchbecken herausholen zu lassen. Auch ist es möglich, eine außerhalb eines Tauchbeckens befindliche Automobilkarosserie für Teilabschnitte des Transportweges temporär von einer waagerechten in eine senkrechte Position zu überführen, beispielsweise während einer Schwenkbewegung um die Mittelachse. Somit kann beispielsweise ein Abtropfvorgang einer zuvor ausgetauchten Fahrzeugkarosserie beeinflusst werden.

Gemäß einer weiteren Variante der erfindungsgemäßen Tauchbehandlungsanlage weist das Transportsystem einen stationären Roboter mit einer Roboterbasis und einem Roboterarm auf, wobei die Roboterbasis um die Mittelachse drehbar ist. Auch hier ist optional vorgesehen, dass der Arm des stationären Roboters wenigstens drei Bewegungsfreiheitsgrade aufweist.

Diese Variante unterscheidet sich von der zuvor genannten Variante darin, dass der Roboter nicht auf einem ringähnlichen Verfahrweg angeordnet ist, sondern die Basis des Roboters selbst um die Mittelachse drehbar ist. Die Funktionalität beider Grundvarianten mit jeweils einem Roboter ist identisch. Die Variante mit einem ringähnlichen Verfahrweg ist ihrerseits zwar etwas komplexer, eröffnet aber insbesondere bei der Anordnung mehrerer Roboter auf ein und demselben Verfahrweg ein höheres Maß an Flexibilität.

Gemäß einer weiteren Ausgestaltungsform der erfindungsgemäßen Tauchbehandlungsanlage weist der stationäre Roboter wenigstens zwei zueinander in einem Winkel um die Mittelachse versetzte Roboterarme auf. Der jeweilige Winkel ist konstruktionsbedingt konstant, so dass die Roboterarme in diesem Fall nicht völlig unabhängig voneinander arbeiten können, das sie nur gemeinsam gedreht werden können. Dennoch ist auch hierdurch ein erhöhtes Maß an Flexibilität erreicht. Idealerweise entspricht der Winkelabstand der Roboterarme zueinander dem Winkelabstand der sternförmig angeordneten Tauchbecken zueinander beziehungsweise einem ganzzahligen Vielfachen davon. Somit ist gewährleistet, dass alle Roboterarme immer synchron in einer mittigen Position vor einem Tauchbecken beziehungsweise einer Übergabestation sind, so dass zumindest eine parallele Tauchbehandlung mehrerer Werkstücke ermöglicht ist.

Entsprechend einer weiteren Variante der erfindungsgemäßen Tauchbehandlungsanlage ist der Roboterarm ausschließlich in sternförmig von der Mittelachse abgehenden Ebenen beweglich. Durch die Anordnung der Tauchbecken um die Mittelachse und die Drehbarkeit der Roboterbasis um die Mittelachse ist lediglich eine Beweglichkeit des Roboterarms in einer derartigen Ebene erforderlich, um eine Fahrzeugkarosserie in ein Tauchbecken abzusenken beziehungsweise aus diesem anzuheben, zumindest bei mittiger Positionierung des jeweiligen Roboterarmes vor einem jeweiligen Tauchbecken. Ein derartiger Roboterarm mit beispielsweise drei Gelenken beziehungsweise drei korrespondierenden Bewegungsfreiheitsgraden lässt sich konstruktiv besonders robust ausgestalten, was insbesondere unter Berücksichtigung des relativ hohen Gewichtes von zu transportierenden Fahrzeugkarosserien, beispielsweise 500kg und darüber, von Bedeutung ist.

Eine weitere Variante der erfindungsgemäßen Tauchbehandlungsanlage ist dadurch gekennzeichnet, dass der Roboterarm an seinem distalen Ende eine Kopplungsvorrichtung aufweist, mittels welcher eine lösbare Verbindung zu einer Adaptervorrichtung für eine Fahrzeugkarosserie herstellbar ist. Optional sind daher auch für jeweilige Fahrzeugkarosserien entsprechende Adaptervorrichtungen vorhanden, in denen diese befestigt werden können, und welche dafür vorgesehen sind, mit der Kopplungsvorrichtung verbunden zu werden.

Somit ist es möglich, dass das Transportsystem der Tauchbehandlungsanlage zu Beginn eines Tauchbehandlungsprozesses mittels der Kopplungsvorrichtung mit einer Fahrzeugkarosserie beziehungsweise mit einer diese tragenden Adaptervorrichtung kraftschlüssig verbunden wird, beispielsweise in einer Übergabestation, und nach Abschluss des Beschichtungsprozesses wieder davon getrennt. Gegebenenfalls ist es auch möglich, eine derartige kraftschlüssige Verbindung zu trennen, während sich die betreffende Fahrzeugkarosserie zum Beschichten in einem der Tauchbecken befindet. Dies ermöglicht, dass der Roboter während dieses Zeitraums andere Transportaufgaben wahrnehmen kann, wodurch die Flexibilität der Tauchbehandlungsanlage weiter gesteigert ist.

Eine weitere Variante der Tauchbehandlungsanlage ist daher dadurch gekennzeichnet, dass die Tauchbecken und die Adaptervorrichtungen aufeinander abgestimmte Haltevorrichtungen aufweisen, so dass eine in das Tauchbecken eingeführte Adaptervorrichtung auch bei gelöster Verbindung zu einem Roboterarm durch die Haltevorrichtungen gehalten ist. Die Haltevorrichtungen können im einfachsten Fall Stützklötze oder dergleichen sein, welche am Grund des Tauchbeckens angeordnet sind, es sind aber auch beispielsweise Halteklammern mit optional integrierter Zentrierhilfe oder dergleichen denkbar.

Anhand der in den Zeichnungen dargestellten Ausführungsbeispiele sollen die Erfindung, weitere Ausführungsformen und weitere Vorteile näher beschrieben werden.

Es zeigen:
- Fig. 1: eine exemplarische erste Tauchbehandlungsanlage,
- Fig. 2: eine exemplarische zweite Tauchbehandlungsanlage,
- Fig. 3: eine exemplarische dritte Tauchbehandlungsanlage,
- Fig. 4: eine exemplarische vierte Tauchbehandlungsanlage sowie
- Fig. 5: eine exemplarische fünfte Tauchbehandlungsanlage.

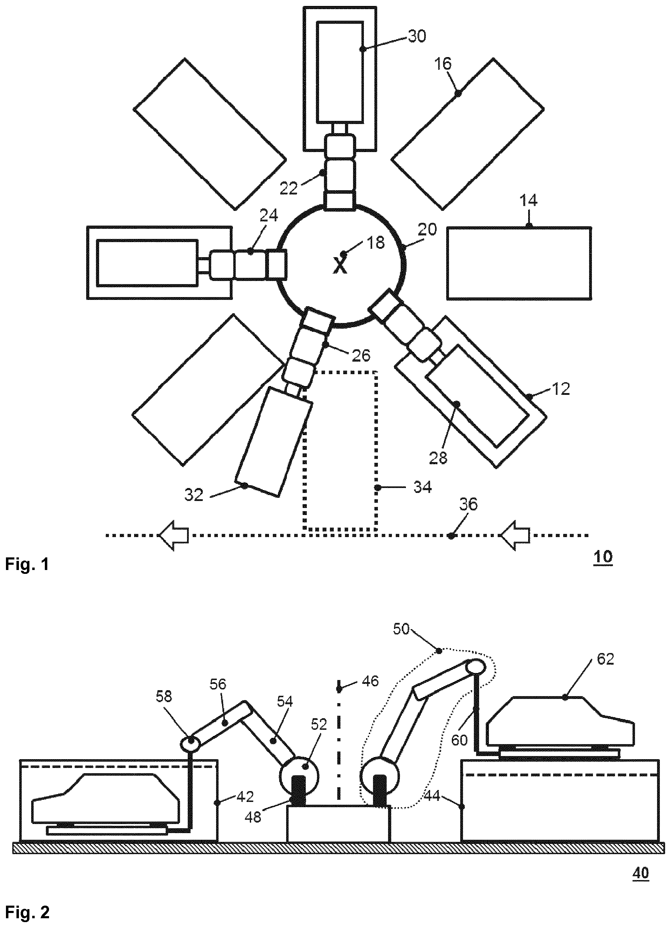

Figur 1 zeigt eine exemplarische erste Tauchbehandlungsanlage in einer Draufsicht 10. Um eine Mittelachse 18 sind sternförmig mehrere Tauchbecken 12, 14, 16 angeordnet, welche in diesem Beispiel einen jeweiligen Winkel von 45° zueinander aufweisen. Die Tauchbecken 12, 14, 16 sind mit einer Vorbehandlungsflüssigkeit gefüllt und derart ausgestaltet, dass Werkstücke, insbesondere Fahrzeugkarosserien 28, 30, 32, in diese eingetaucht werden können.

Für den Transport der Fahrzeugkarosserien 28, 30, 32, und damit auch für deren Eintauchen in die Tauchbecken 12, 14, 16, ist ein Transportsystem vorgesehen, welches mehrere Roboter 22, 24, 26 umfasst, die längs eines sich ringähnlich um die Mittelachse 18 erstreckenden Verfahrweges 20 beweglich angeordnet sind. Jeder der Roboter 22, 24, 26 weist einen Roboterarm mit drei Bewegungsfreiheitsgraden auf, welche durch entsprechende Gelenke realisiert sind, wobei die Roboterarme jeweils ausschließlich in sternförmig von der Mittelachse 18 abgehenden Ebenen bewegbar sind. Die Roboter 22, 24, 26 sind unabhängig voneinander auf dem ringähnlichen Verfahrweg 20 verfahrbar und weisen jeweilige Kopplungsvorrichtungen zu den Fahrzeugkarosserien 28, 30, 32 beziehungsweise zu diese tragenden Adaptervorrichtungen auf. Jeder der Roboter 22, 24, 26 ist für die gesamte Dauer einer Tauchbehandlung mit einer jeweiligen Fahrzeugkarosserie 28, 30, 32 verbunden.

Neben den Tauchbecken 12, 14, 16 ist in der gezeigten sternförmigen Anordnung auch eine Übergabestation 34 vorhanden. Das Transportsystem ist dafür vorgesehen, Fahrzeugkarosserien 28, 30, 32 aus der Übergabestation 34 zu entnehmen beziehungsweise dorthin zu übergeben. Ein übergeordnetes Transportsystem 36 ist ebenfalls dafür vorgesehen, Fahrzeugkarosserien 28, 30, 32 aus der Übergabestation 34 zu entnehmen beziehungsweise dorthin zu übergeben.

Figur 2 zeigt eine exemplarische zweite Tauchbehandlungsanlage in einer Seitenansicht 40. Um eine Mittelachse 46 sind sternförmig mehrere Tauchbecken 42, 44 angeordnet, Zwei Roboter 50 sind auf einem sich ringähnlich um die Mittelachse 46 erstreckenden Verfahrweg 48 angeordnet. Ein Roboter 50 weist eine Roboterbasis 52 sowie drei Roboterarmglieder 54, 56, 58 auf, wodurch eine durch jeweilige Gelenke verbundene kinematische Kette dargestellt ist. Am distalen Ende eines jeweiligen Roboterarmes ist eine jeweilige Kopplungsvorrichtung vorgesehen, mittels welcher eine lösbare Verbindung zu einer Adaptervorrichtung 60 für Fahrzeugkarosserien 62 herstellbar ist. Einer der Roboter 50 hält eine Fahrzeugkarosserie 62 oberhalb des Beckenrandes des Tauchbeckens 44, der andere Roboter hat eine Fahrzeugkarosserie in das Tauchbecken 42 eingetaucht.

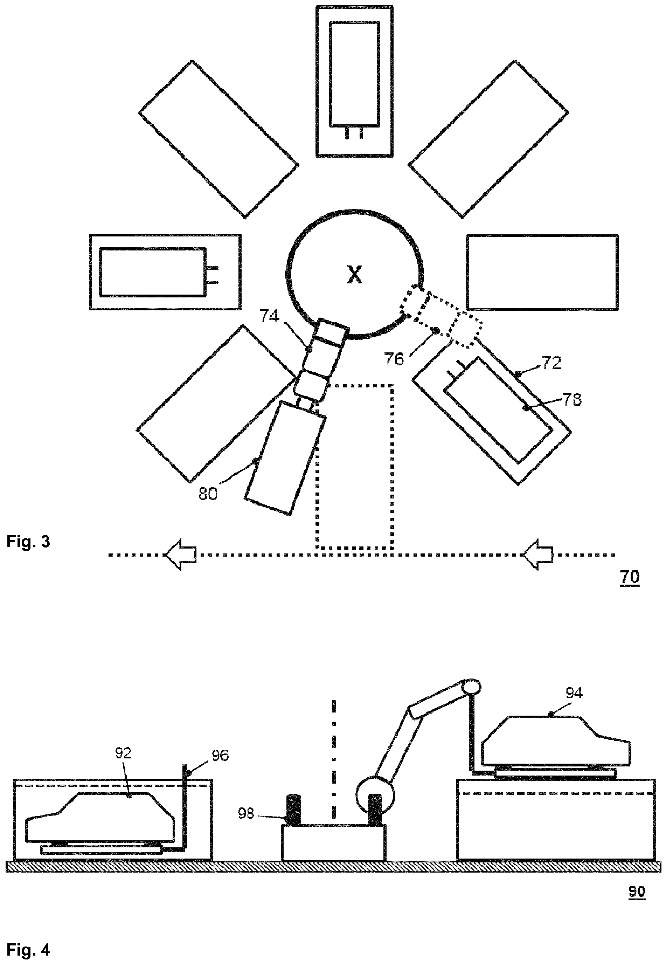

Figur 3 zeigt eine exemplarische dritte Tauchbehandlungsanlage in einer Draufsicht 70. Die Tauchbehandlungsanlage entspricht in etwa der in der Fig. 1 gezeigten Tauchbehandlungsanlage 10, wobei hier abweichend lediglich ein Roboter 74 sowie ein optionaler Roboter 76 für den Transport von Fahrzeugkarosserien 78, 80 vorgesehen sind. In diesem Beispiel sind die Roboter 74, 76 nicht für die gesamte Dauer einer Tauchbehandlung mit einer Fahrzeugkarosserie 78, 80 beziehungsweise einer diese tragenden Adaptervorrichtung verbunden, sondern werden vielmehr davon abgekoppelt, solange die betreffende Fahrzeugkarosserie in einem der Tauchbecken abgestellt ist. Hierdurch ist ermöglicht, dass der Transport der Fahrzeugkarosserien 78, 80 mit einer geringeren Anzahl an Robotern 74, 76 erfolgen kann, da diese im abgekoppelten Zustand andere Transportaufgaben ausführen können.

Figur 4 zeigt eine exemplarische vierte Tauchbehandlungsanlage in einer Seitenansicht 90. In diesem Beispiel ist lediglich ein einziger Roboter auf einem sich ringähnlich um eine Mittelachse erstreckenden Verfahrweg 98 vorgesehen, wobei der Roboter nur für die Dauer des Transportes mit einer Adaptervorrichtung 96 für Fahrzeugkarosserien 92, 94 verbunden ist. Auf der linken Seite der Figur ist eine in einem Tauchbecken abgestellte Fahrzeugkarosserie 92 gezeigt, auf der rechten Seite ist eine oberhalb des Beckenrandes eines Tauchbeckens von einem Roboter gehaltene Fahrzeugkarosserie 94 dargestellt.

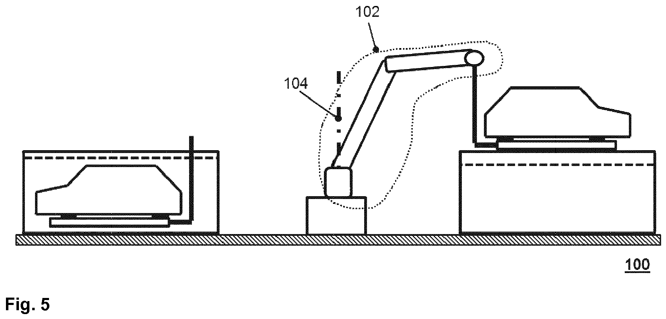

Figur 5 zeigt eine exemplarische fünfte Tauchbehandlungsanlage in einer Seitenansicht 100. Diese entspricht im Wesentlichen der in der Fig. 4 gezeigten Tauchbehandlungsanlage, jedoch ist hier anstelle eines Roboters, der auf einem sich längs eines ringförmig um eine Mittelachse erstreckenden Verfahrweg angeordnet ist, ein Roboter 102 vorgesehen, welcher direkt um eine Mittelachse 104 drehbar ist.

### Bezugszeichenliste

- 10: exemplarische erste Tauchbehandlungsanlage
- 12: Tauchbecken
- 14: Tauchbecken
- 16: Tauchbecken
- 18: Mittelachse
- 20: sich ringähnlich um die Mittelachse erstreckender Verfahrweg
- 22: Roboter
- 24: Roboter
- 26: Roboter
- 28: Fahrzeugkarosserie
- 30: Fahrzeugkarosserie
- 32: Fahrzeugkarosserie
- 34: Übergabestation
- 36: übergeordnetes Transportsystem
- 40: exemplarische zweite Tauchbehandlungsanlage
- 42: Tauchbecken
- 44: Tauchbecken
- 46: Mittelachse
- 48: sich ringähnlich um die Mittelachse erstreckender Verfahrweg
- 50: Roboter
- 52: Roboterbasis
- 54: Roboterarm, erstes Glied
- 56: Roboterarm, zweites Glied
- 58: Roboterarm, drittes Glied
- 60: Adaptervorrichtung
- 62: Fahrzeugkarosserie
- 70: exemplarische dritte Tauchbehandlungsanlage
- 72: Tauchbecken
- 74: Roboter
- 76: optionaler Roboter
- 78: Fahrzeugkarosserie
- 80: Fahrzeugkarosserie
- 90: exemplarische vierte Tauchbehandlungsanlage
- 92: Fahrzeugkarosserie
- 94: Fahrzeugkarosserie
- 96: Adaptervorrichtung
- 98: sich ringähnlich um die Mittelachse erstreckender Verfahrweg
- 100: exemplarische fünfte Tauchbehandlungsanlage
- 102: stationärer Roboter
- 104: Mittelachse

## Patentansprüche

1. Tauchbehandlungsanlage (10, 40, 70, 90, 100) für Fahrzeugkarosserien (28, 30, 32, 62, 78, 80, 92, 94), umfassend wenigstens drei Tauchbecken (12, 14, 16, 42, 44, 72) und ein Transportsystem, mittels welchem zu behandelnde Fahrzeugkarosserien (28, 30, 32, 62, 78, 80, 92, 94) individuell und unabhängig voneinander in ein jeweiliges Tauchbecken (12, 14, 16, 42, 44, 72) ein- beziehungsweise aus diesem ausgeführt werden können,
**dadurch gekennzeichnet,**
**dass** die Tauchbecken (12, 14, 16, 42, 44, 72) sternähnlich um eine Mittelachse (18, 46, 104) angeordnet sind und dass die Ein- beziehungsweise Ausführbewegung der Fahrzeugkarosserien (28, 30, 32, 62, 78, 80, 92, 94) durch das Transportsystem eine Schwenkbewegung um die Mittelachse (18, 46, 104) umfasst.

2. Tauchbehandlungsanlage nach Anspruch 1, **dadurch gekennzeichnet, dass** das Transportsystem einen Arbeitsbereich aufweist, welcher sich rotationssymmetrisch um die Mittelachse (18, 46, 104) erstreckt.

3. Tauchbehandlungsanlage nach Anspruch 1 oder 2, **dadurch gekennzeichnet, dass** diese wenigstens eine Übergabestation (34) für Fahrzeugkarosserien (28, 30, 32, 62, 78, 80, 92, 94) aufweist, welche zusammen mit den Tauchbecken (12, 14, 16, 42, 44, 72) sternförmig um die Mittelachse (18, 46, 104) angeordnet ist.

4. Tauchbehandlungsanlage nach Anspruch 3, **dadurch gekennzeichnet, dass** das Transportsystem dafür vorgesehen ist, Fahrzeugkarosserien (28, 30, 32, 62, 78, 80, 92, 94) aus der Übergabestation (34) zu entnehmen beziehungsweise dorthin zu übergeben.

5. Tauchbehandlungsanlage nach Anspruch 4, **dadurch gekennzeichnet, dass** ein übergeordnetes Transportsystem (36) vorhanden ist, welches dafür vorgesehen ist, Fahrzeugkarosserien (28, 30, 32, 62, 78, 80, 92, 94) aus der Übergabestation (34) zu entnehmen beziehungsweise dorthin zu übergeben.

6. Tauchbehandlungsanlage nach einem der vorherigen Ansprüche, **dadurch gekennzeichnet, dass** das Transportsystem wenigstens einen Roboter (22, 24, 26, 50, 74, 76) mit einer Roboterbasis (52) und einem Roboterarm (54 + 56 + 58) umfasst, wobei die Roboterbasis (52) längs eines sich ringähnlich um die Mittelachse (18, 46, 104) erstreckenden Verfahrweges (20, 48, 98) bewegbar ist.

7. Tauchbehandlungsanlage nach Anspruch 6, **dadurch gekennzeichnet, dass** der Roboterarm (54 + 56 + 58) des Roboters wenigstens drei Bewegungsfreiheitsgrade aufweist.

8. Tauchbehandlungsanlage nach einem der Ansprüche 1 bis 5, **dadurch gekennzeichnet, dass** das Transportsystem einen stationären Roboter (102) mit eine Roboterbasis und einem Roboterarm aufweist, wobei die Roboterbasis um die Mittelachse (18, 46, 104) drehbar ist.

9. Tauchbehandlungsanlage nach Anspruch 8, **dadurch gekennzeichnet, dass** der Arm des stationären Roboters (102) wenigstens drei Bewegungsfreiheitsgrade aufweist.

10. Tauchbehandlungsanlage nach Anspruch 8 oder 9, **dadurch gekennzeichnet, dass** der stationäre Roboter (102) wenigstens zwei zueinander in einem Winkel um die Mittelachse versetzte Roboterarme aufweist.

11. Tauchbehandlungsanlage nach einem der Ansprüche 6 bis 10, **dadurch gekennzeichnet, dass** der Roboterarm (54 + 56 + 58) ausschließlich in sternförmig von der Mittelachse (18, 46, 104) abgehenden Ebenen beweglich ist.

12. Tauchbehandlungsanlage nach einem der Ansprüche 6 bis 11, **dadurch gekennzeichnet, dass** der Roboterarm (54 + 56 + 58) an seinem distalen Ende eine Kopplungsvorrichtung aufweist, mittels welcher eine lösbare Verbindung zu einer Adaptervorrichtung (60, 96) für eine Fahrzeugkarosserie (28, 30, 32, 62, 78, 80, 94) herstellbar ist.

13. Tauchbehandlungsanlage nach einem Anspruch 12, **dadurch gekennzeichnet, dass** für jeweilige Fahrzeugkarosserien (28, 30, 32, 62, 78, 80, 92, 94) jeweilige Adaptervorrichtungen (60, 96) vorgesehen sind, in der diese befestigt werden können, und welche dafür vorgesehen sind, mit der Kopplungsvorrichtung verbunden zu werden.

14. Tauchbehandlungsanlage nach Anspruch 12, **dadurch gekennzeichnet, dass** die Tauchbecken (12, 14, 16, 42, 44, 72) und die Adaptervorrichtungen (60, 96) aufeinander abgestimmte Haltevorrichtungen aufweisen, so dass eine in das Tauchbecken (12, 14, 16, 42, 44, 72) eingeführte Adaptervorrichtung (60, 96) auch bei gelöster Verbindung zu einem Roboterarm (54 + 56 + 58) gehalten ist.
